(19) Europäisches Patentamt

European Patent Office

Office européen des brevets

(11) **EP 0 493 783 B1**

(12) **EUROPÄISCHE PATENTSCHRIFT**

(45) Veröffentlichungstag und Bekanntmachung des Hinweises auf die Patenterteilung:
**14.02.1996 Patentblatt 1996/07**

(51) Int Cl.6: **C08J 9/12**
// C08L69/00

(21) Anmeldenummer: **91122156.2**

(22) Anmeldetag: **23.12.1991**

(54) **Polycarbonatschaumstoffe**

Polycarbonate foams

Mousses de polycarbonate

(84) Benannte Vertragsstaaten:
**CH DE ES FR GB IT LI NL**

(30) Priorität: **04.01.1991 DE 4100118**

(43) Veröffentlichungstag der Anmeldung:
**08.07.1992 Patentblatt 1992/28**

(73) Patentinhaber: **BAYER AG**
**D-51368 Leverkusen (DE)**

(72) Erfinder:
• **Köhler, Burkhard, Dr.**
**W-4150 Krefeld 11 (DE)**
• **Kircher, Klaus, Dr.**
**W-5090 Leverkusen 1 (DE)**
• **Grigo, Ulrich, Dr.**
**W-4152 Kempen 3 (DE)**
• **Horn, Klaus, Dr.**
**W-4150 Krefeld (DE)**
• **Ebert, Wolfgang, Dr.**
**W-4150 Krefeld (DE)**
• **Lundy, Charles-Earl, Dr.**
**Pittsburgh, PA 15205-9741 (US)**

(56) Entgegenhaltungen:
**DE-A- 1 694 876**

• **WORLD PATENTS INDEX Derwent Publications Ltd., London, GB; AN 78-70233A (39)**

## Beschreibung

Schaumstoffe aus aromatischen Polycarbonaten und Verfahren zu ihrer Herstellung sind bekannt. Beispielsweise kann man aromatische Polycarbonate mit Stickstoff- oder Kohlendioxid-abgebenden Treibmitteln - Zersetzungstreibmitteln - aufschäumen (vgl. DE-AS 1 031 507 und DE-OS 24 34 085). Dabei beobachtet man im allgemeinen einen deutlichen Abbau der Molekulargewichte. Die nicht flüchtigen Spaltprodukte des Treibmittels verbleiben in den Schaumstoffen.

Es ist auch bekannt, daß man aromatische Polycarbonate nur in vollständig trockenem Zustand einwandfrei verarbeiten kann. Darin enthaltene Feuchtigkeit führt bei der Verarbeitung zum Abbau des Molekulargewichtes und zur Bildung von Blasen (vgl. Plastics Technology 10, 1964, Seite 32 bis 36; GB-PS 841 652).

Der Erfindung liegt nun die Erkenntnis zugrunde, daß Wasser als physikalisches Verdampfungstreibmittel für die Herstellung von Schaumstoffen mit guter Porenstruktur aus aromatischen Polycarbonaten verwendet werden kann, wenn es in Form eines gegenüber aromatischem Polycarbonat inerten, hydratisierten, anorganischen Salzes eingebracht wird, welches sein Hydratwasser erst bei Temperaturen über 100°C abgibt.

Mit Wasser als Treibmittel verschäumte Polycarbonate enthalten keine RücksLände des Treibmittels, weil das Wasser beim Verschäumen restlos verdampft. Da bei dieser Art der Verschäumung nur ein überraschend geringer Molekulargewichtsabbau beobachtet wird, das Polymer also praktisch nicht geschädigt wird, sind die erhaltenen Schaumstoffe recyclierbar. Sie können praktisch verlustfrei wieder aufgeschmolzen und erneut zur Herstellung der verschäumbaren Massen eingesetzt werden.

Gegenstand der Erfindung sind verschäumbare Mischungen enthaltend

a) ein aromatisches Polycarbonat,

b) 0,1 bis 5 Gew.-% bezogen auf a) eines Hydrates eines Salzes von Metallen der 2.Hauptgruppe der Periodensystems mit Mineralsäuren und

c) gegebenenfalls bis zu 10 Gew.-% bezogen auf a) eines Nucleierungsmittels.

Aromatische Polycarbonate a) sind Thermoplasten die nach üblichen, vielfach beschriebenen Verfahren aus Diphenolen und Carbonatspendern hergestellt worden sind (siehe beispielsweise H. Schnell, Chemistry and Physics of Polycarbonates, Interscience Publishers, New York, 1964", US-Patent 3 028 365 und DE-OS 3 832 396.

Geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis(hydroxyphenyl)-ketone, Bis-(hydroxyphenyl)-sulfone, Bis-(hydroxyphenyl]-sulfoxide, α,α'-Bis-lhydroxyphenyl)-diisopropylbenzole, sowie deren kernalkylierte und kernhalogenierte Derivate.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-14-hydroxyphenyl)-p-diisopropylbenzol, 2,2-Bis-(3-methyl-4-hydroxyphenyl)-propan, 2,2-Bis-13-chlor-4-hydroxyphenyl)-propan, Bis-(3,5-dimethyl-4-hydroxyphenyl)-methan, 2,2-Bis-13,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-13,5-dichlor-4-hydroxyphenyl)-propan, 2,2-Bis-13,5-dibrom-4-hydroxyphenyl)-propan und 1,1-Bis-14-hydroxyphenyl)-3,3,5-trimethylcyclohexan.

Besonders bevorzugte Diphenole sind 2,2-Bis-(4-hydroxyphenyl)-propan, 2,2-Bis-13,5-dimethyl-4-hydroxyphenyl)-propan, 2,2-Bis-13,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Die Diphenole können einzeln oder als Gemische verwendet werden, es sind also sowohl Homopolycarbonate als auch Copolycarbonate einbezogen. Die Diphenole sind bekannt oder nach bekannten Verfahren herstellbar.

Es können auch geringe Mengen, vorzugsweise Mengen von 0,05 bis 2,0 Mol-%, bezogen auf Mole eingesetzter Diphenole, an tri- oder mehr als trifunktionellen Verbindungen, insbesondere solchen mit drei oder mehr als drei phenolischen Hydroxylgruppen, mitverwendet werden, um verzweigte Polycarbonate zu erzeugen, sind beispielsweise

Phloroglucin,
4,6-Dimethyl-2,4,6-tri-(4-hydroxyphenyl)-hepten-2,
4,6-DimeLhyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-14-hydroxyphenyl-isopropyl)-phenol,
2,6-Bis12-hydroxy-5'-methyl-benzyl)-4-methylphenol,
2-14-Hydroxyphenyl)-2-13,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan,
1,4-Bis-(4',4"-dihydroxyLriphenyl)-methyl-benzol,
2,4-Dihydroxybenzoesäure, Trimesinsäure, Cyanurchlorid
und 3,3-Bis-(3-methyl-4-hydroxyphenyl)-2-oxo-2,3-dihydroindol.

Die Verzweiger können entweder mit den Diphenolen selbst und den Molekulargewichtsreglern in der wäßrigen alkalischen Phase vorgelegt werden, oder in einem organischen Lösungsmittel gelost vor der Phosgenierung, zugegeben werden.

Geeignete Molekulargewichtsregler sind bekanntlich monofunktionelle Verbindungen, vorzugsweise Monophenole, z.B. Phenol selbst.

Die in dieser Erfindung verwendeten aromatischen Polycarbonate haben mittlere Molekulargewichte $\bar{M}$ w; (Gewichtsmittel ermittelt durch Gelpermeationschromatographie) von 5000 bis 50000, vorzugsweise von 15000 bis 35000.

Die relativen Lösungsviskositäten nach DIN 51562, Teil 3 des bevorzugten Bereiches sind entsprechend 1,15 bis 1,35, gemessen in Dichlormethan (0,5 g/100 ml).

Thermoplastische, aromatische Polycarbonate im Sinne der vorliegenden Erfindung schließen thermoplastische aromatische Polyestercarbonate mit ein, also solche "Polycarbonate"", in denen ein Teil, maximal 50 Mol-% an Carbonatstruktureinheiten durch aromatische Dicarboxylatstruktureinheiten in bekannter Weise ersetzt sind.

Geeignete aromatische Dicarbonsäuren sind beispielsweise Orthophthalsäure, Terephthalsäure, Isophthalsäure, tert.-BuLylisophthalsäure, 3,3'-Diphenyldicarbonsäure, 4,4'-Diphenyldicarbonsäure, 4,4 -Diphenyletherdicarbonsäure, 4,4'-Benzophenondicarbonsäure, 3,4'-Benzophenondicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Geeignete Diphenole sind die vorstehend für die Polycarbonatherstellung genannten.

Entsprechendes gilt für die Verzweiger und für die monophenolischen Kettenabbrecher, wobei hier aber auch aromatische Monocarbonsäuren beispielsweise in Form ihrer Säurechloride oder Ester verwendet werden können.

Die Kohlensäure kann entweder via $COCl_2$ oder via Diphenylcarbonat in die Polyestercarbonate eingebaut werden, je nach Wahl des Herstellungsverfahrens, also je nachdem, ob Phasengrenzflächenpolykondensation oder Schmelzumesterung zur Polyestercarbonatherstellung verwendet wird.

Entsprechendes gilt für die aromatischen Dicarbonsäuren; sie werden entweder als aromatische Dicarbonsäuredichloride im Zweiphasengrenzflächenverfahren oder als Dicarbonsäurediester im Schmelzumesterungsverfahren eingesetzt. Entsprechendes gilt, falls als Kettenabbrecher Monocarbonsäuren eingesetzt werden.

Die Herstellung der erfindungsgemäß zu verwendenden Polyestercarbonate erfolgt nach bekannten Herstellungsverfahren, also wie bereits erwähnt beispielsweise nach dem Phasengrenzflächenverfahren oder nach dem Schmelzumesterungsverfahren.

Die zu verwendenden Polyestercarbonate können somit sowohl linear als auch in bekannter Weise verzweigt sein.

Die in dieser Erfindung verwendeten aromatischen Polyestercarbonate haben mittlere Molekulargewichte $\bar{M}$ w; (Gewichtsmittel ermittelt durch Gelpermeationschromatographie) von 5000 bis 50000, vorzugsweise von 15000 bis 35000.

Geeignete Hydrate von Salzen von Metallen der 2. Hauptgruppe des Periodensystems mit Mineralsäuren sind beispielsweise Sulfate, Sulfite, Halogenide (Chloride), Phosphate, Phosphite von Magnesium, Calcium und Strontium. Besonders bevorzugt sind Magnesiumsulfatheptahydrat, Magnesiumchloridhexahydrat, und Calciumsulfatdihydrat. Bei der Auswahl dieser Hydratsalze ist wichtig darauf zu achten, daß sie ihr Hydratwasser erst bei Temperaturen von über 100°C abgeben und daß die Salze selbst das Polycarbonat nicht angreifen. Ausgeschlossen sind daher alkalisch reagierende Salze, also Salze starker Basen mit schwachen Säuren, weil diese bei höheren Temperaturen das Polycarbonat angreifen.

Die Menge dieser Hydratsalze muß so bemessen werden, daß etwa 0,05 bis 1 Gew.-% Wasser, bezogen auf das Polycarbonat zum Verschäumen zur Verfügung steht. Im allgemeinen zieht man daher 0,1 bis 5 Gew.-% Hydratsalze vor. Insbesondere gilt diese Mengenangabe für die o.g. bevorzugten Hydratsalze. Die Menge Wasser bzw. Hydratsalz richtet sich natürlich auch nach der Dichte des herzustellenden Schaumstoffs.

Geeignete Nucleierungsmittel die zur Erleichterung der Schaumstoffbildung zugesetzt werden können, sind neutrale bis schwach saure Füllstoffe wie Glaspulver, Quarzsand, feindisperse Kieselsäure und auch Glasfaser. Nucleierungsmittel werden im allgemeinen in Mengen bis zu 10 Gew.-% bezogen auf Polycarbonat verwendet. Glasfasern in diesem Zusammenhang sind insbesondere Kurzglasfasern.

Zur Herstellung der erfindungsgemäßen verschäumbaren Mischungen können die Bestandteile in beliebiger Reihenfolge mechanisch gemischt werden, wobei die Temperatur nicht über 100°C steigen darf, um eine vorzeitige Freisetzung und Verdampfung des Wassers auszuschließen. Methoden zum intensiven und homogenen Mischen fester Bestandteile um die es sich hier handelt sind dem Fachmann bekannt.

Die Mischung ist bei Temperaturen bis etwa 100°C stabil, so daß sie zu beliebigen Zeitpunkten hergestellt werden kann und beliebig lagerfähig ist.

Zur Bildung des Schaumstoffs aus der erfindungsgemäßen Mischung ist es lediglich erforderlich, sie nach den bekannten Methoden der thermoplastischen Formgebung zu verarbeiten. Es ist also möglich, die Masse durch Spritzgießen oder durch Extrudieren zu verarbeiten, wobei man zweckmäßig Anlagen verwendet, die einen Schmelzdruck von mindestens 30 bar bis zur Düse der Spritzgießanlage bzw. dem Extrusionswerkzeug gewährleisten. Bei der Verarbeitung durch Spritzgießen sind Temperaturen von 240 bis 340°C, vorzugsweise 260 bis 320°C geeignet. Zur Extrusion haben sich Temperaturen von 210 bis 340°C, vorzugsweise 220° bis 270°C bewährt. Aus den erfindungsgemäßen verschäumbaren Mischungen lassen sich auf diese Weise beliebige Formkörper, insbesondere großflächige und großvolumige Gegenstände beispielsweise Leuchtenteile, Abdeckungen, Gehäuse für Bürogeräte, Schrankelemente herstellen. Eine besondere Anwendung ist für großflächige Platten für Werbezwecke im Kraftfahrzeugbau und im Hochbau geeignet, weil es hier auf die Wiederverwendbarkeit gebrauchter Teile und auch von Abfällen ankommt.

Durch Aufschmelzen eines Schaumstoffkörpers wird letzlich ein Gemisch aus Polycarbonat und falls vorhanden aus Nucleierungsmittel bzw. Glas zurückgewonnen. Dieses Gemisch kann wieder zur Herstellung der erfindungsgemäßen Mischung verwendet werden. Dies bedeutet, daß das Polycarbonat vollständig recyclierbar ist.

Beispiel 1 (gemäß vorliegender Erfindung)

94,5 Gew.-% einer Mischung von nicht vorgetrocknetem Polycarbonat mit einer relativen Lösungsviskosität nach DIN 51 562 Teil 3 von 1,290 wurden im Taumelmischer mit 0,3 Gew.-% Syloid 74 (feindisperse Kieselsäure) und 0,25 Gew.-% feingemahlenem $MgSO_4 \times 7H_2O$ vermischt und wie folgt zu Formkörpern der Dichte 0,7 $g/cm^3$ verarbeitet:

Die Granulatmischung wurde auf einer Demag D 80 Spritzgießanlage mit Zylindertemperaturen von 260°C (Einzug), 280°C, 300°C und einer Düsentemperatur von 300°C entsprechend einer Massetemperatur von 300°C zu geschäumten Formteilen der Dimension 150 mm x 90 mm x 6,4 mm verspritzt. Die Werkzeugtemperatur betrug 23°C. Bei einem Schußgewicht von 60,5 g resultierten Formteile mit integraler Verteilung der Dichte.

Der erhaltene Schaum war sehr feinporig und enthielt keine größeren Blasen.

Die relative Lösungsviskosität nach DIN 51 562 Teil 3 betrug 1,275. Die Charpy Schlagzähigkeit nach DIN 53 453 betrug 56 $kJ/m^2$.

Beispiel 2 (gemäß vorliegender Erfindung)

99,5 Gew,-% Polycarbonat ohne Additive mit einer relativen Lösungsviskosität nach DIN 51 562 Teil 3 von (1,31 wurde ohne Vortrocknung mit 0,5 Gew.-% feingemahlenem $MgSO_4 \times 7\ H_2O$ in einem Taumelmischer vermischt und auf einem Reiffenhäuser Extruder mit Zylinderdurchmesser 70 mm und bei einer Massetemperatur von 230°C am Düsenspalt mittels Flachdüse 350 mm x 2 mm zu einem langgestreckten Formteil geformt, das in Gleitkalibratoren mit einem Plattenabstand von 5 mm geglättet und mittels Raupenabzug abgezogen wurde.

Es resultierte ein Extrudatschaum mit einem Raumgewicht von 0,7 $g/cm^3$ und gleichmäßig verteilten kleinen Blasen, wobei in den Randbereichen mit 0,5 mm Distanz zur Formteiloberfläche die Blasenzahl und Blasengröße deutlich abnahm.

Die relative Lösungsviskosität des Polycarbonats betrug im Formteil 1,302.

Beispiel 3 (gemäß vorliegender Erfindung)

Beispiel 2 wurde wiederholt jedoch bei Einsatz von 99,2 Gew.-% Polycarbonat, 0,5 Gew.-% feingemahlenem $MgSO_4 \times 7H_2O$ und zusätzlich 0,3 Gew.-% Syloid 74 (feindisperse Kieselsäure) und Einstellung eines Raumgewichtes von 0,5 $g/cm^3$.

Es resultierte ein sehr guter Schaum mit kompakten Randbereichen und kleinen Blasen in der Formteilmitte.

Die relative Lösungsviskosität des Polycarbonats im Formteil betrug 1,30.

Beispiel 4 (gemäß vorliegender Erfindung)

Beispiel 2 wurde wiederholt, wobei unter ansonsten gleichen Bedingungen 97,5 Gew.-% Polycarbonat mit einer relativen Lösungsviskosität von 1,31 mit 0,5 Gew.-% feingemahlenem $MgSO_4 \times 7H_2O$ und 2 Gew.-% gemahlener Kurzglasfaser MF 7901 (Fa. Bayer AG) in einem Taumelmischer vermischt und anschließend extrudiert wurde. Der mischer vermischt und anschließend extrudiert wurde. Der Extrudatschaum der Dichte 0,50 $g/cm^3$ zeigte eine relative Lösungsviskosität von 1,30 und eine Schaumstruktur, die der in Beispiel 3 vergleichbar war.

Beispiel 5 (gemäß vorliegender Erfindung)

Beispiel 2 wurde wiederholt, wobei jedoch 97,2 Gew.-% Polycarbonat (relative Lösungsviskosität 1,31) und 2,8 Gew.-% einer Mischung bestehend aus a) $MgSO_4 \times 7H_2O$, feingemahlen; MF 7901 Kurzglasfaser und Syloid 74 feindisperse Kieselsäure über Colortronic-Dosier- und Mischgeräte in den Aufgabetrichter des Extruders gegeben wurden, derart, daß die Endmischung 0,5 Gew.-% $MgSO_4 \times 7H_2O$; 2 Gew.-% MF 7901 und 0,3 Gew.-% Syloid 74 enthielten.

Der resultierende Schaum der Dichte 0,50 $g/cm^3$ war besonders feinporig und gleichmäßig, wobei die Schaumstruktur gegenüber der in den Beispielen 3 und 4 noch deutlich besser war.

## Patentansprüche

**Patentansprüche für folgende Vertragsstaaten : CH, DE, FR, GB, IT, LI, NL**

1.  Verschäumbare Mischungen enthaltend

    a) ein aromatisches Polycarbonat,

    b) 0,1 bis 5 Gew.-% bezogen auf a) eines Hydrats eines Salzes von Metallen der 2. Hauptgruppe des Periodensystems mit Mineralsäuren und

    c) gegebenenfalls bis zu 10 Gew.-% bezogen auf a) eines Nucleierungsmittels.

2.  Verfahren zur Herstellung der Mischung nach Anspruch 1, dadurch gekennzeichnet, daß man die Bestandteile in an sich bekannter Weise bei Temperaturen bis zu 100°C physikalisch intensiv mischt.

3.  Verwendung der Mischung gemäß Anspruch 1 zur Herstellung von Schaumstofformkörpern durch an sich bekannte thermoplastische Verarbeitung.

4.  Mischungen gemäß Anspruch 1, dadurch gekennzeichnet, daß sie gemäß b) Sulfate, Sulfite, Halogenide, Phosphate oder Phosphite von Magnesium oder Calcium enthalten.

**Patentanspruch für folgenden Vertragsstaat : ES**

1.  Verfahren zur Herstellung einer Mischung enthaltend

    a) ein aromatisches Polycarbonat,

    b) 0,1 bis 5 Gew.-% bezogen auf a) eines Hydrats eines Salzes, von Metallen der 2. Hauptgruppe des Periodensystems mit Mineralsäuren und

    c) gegebenenfalls bis zu 10 Gew.-% bezogen auf a) eines Nucleierungsmittels

    dadurch gekennzeichnet, daß man die Bestandteile in an sich bekannter Weise bei Temperaturen bis zu 100°C physikalisch intensiv mischt.

## Claims

**Claims for the following Contracting States : CH, DE, FR, GB, IT, LI, NL**

1.  Foamable mixtures containing

    a) an aromatic polycarbonate,
    b) 0.1 to 5% by weight, based on a), of a hydrate of a salt of metals belonging to the second main group of the periodic system with mineral acids and
    c) optionally up to 10% by weight, based on a), of a nucleating agent,

2.  A process for the production of the mixture claimed in claim 1, characterized in that the constituents are subjected to intensive physical mixing in known manner at temperatures of up to 100°C.

3.  The use of the mixture claimed in claim 1 for the production of foam moldings by thermoplastic processing known per se.

4.  Mixtures claimed in claim 1, characterized in that they contain sulfates, sulfites, halides, phosphates or phosphites of magnesium or calcium as component b).

**Claim for the following Contracting State : ES**

1.  A process for the production of mixtures containing

    a) an aromatic polycarbonate,
    b) 0.1 to 5% by weight, based on a), of a hydrate of a salt of metals belonging to the second main group of the periodic system with mineral acids and
    c) optionally up to 10% by weight, based on a), of a nucleating agent,

    characterized in that the constituents are subjected to intensive physical mixing in known manner at temperatures of up to 100°C.

## Revendications

**Revendications pour les Etats contractants suivants : CH, DE, FR, GB, IT, LI, NL**

1.  Mélanges gonflables en mousse contenant :

    a) un polycarbonate aromatique,
    b) 0,1 à 5 % en poids, par rapport à a), d'un hydrate d'un sel de métaux du deuxième groupe principal de la classification périodique et d'acides minéraux et

c) le cas échéant jusqu'à 10 % en poids, par rapport à a), d'un agent de nucléation.

2. Procédé de préparation des mélanges selon la revendication 1, caractérisé en ce que l'on soumet les constituants à mélange physique intensif de manière connue en soi à des températures allant jusqu'à 100°C.

3. Utilisation des mélanges selon la revendication 1 pour la fabrication de corps moulés par façonnage thermoplastique connu en soi.

4. Mélanges selon la revendication 1, caractérisés en ce qu'ils contiennent en tant que constituants b) des sulfates, des sulfites, des halogénures, des phosphates ou des phosphites, du magnésium ou du calcium.

**Revendication pour l'Etat contractant suivant: ES**

1. Procédé de préparation d'un mélange contenant :

a) un polycarbonate aromatique,
b) 0,1 à 5 % en poids, par rapport à a), d'un hydrate d'un sel de métaux du deuxième groupe principal de la classification périodique et d'acides minéraux et
c) le cas échéant jusqu'à 10 % en poids, par rapport à a), d'un agent de nucléation,

caractérisé en ce que l'on soumet les constituants à un mélange physique intensif de manière connue en soi à des températures allant jusqu'à 100°C.